# EUROPÄISCHE PATENTANMELDUNG

(11) **EP 1 457 450 A1**
(43) Veröffentlichungstag der Anmeldung: **15.09.2004**
(21) Anmeldenummer: 04005233.4
(22) Anmeldetag: 05.03.2004
(51) Int. Cl.: B65H 75/40, H02G 11/02

(54) **Tragbare Kabeltrommel**

(30) Priorität: 14.03.2003 DE 20304085 U
(71) Anmelder: Lechermann, Konrad, 85104 Lobsing (DE)
(72) Erfinder: Lechermann, Konrad, 85104 Lobsing (DE)
(74) Vertreter: Liebl, Thomas

(57) **Zusammenfassung**

Die Erfindung betrifft eine tragbare Kabeltrommel (1) mit einem Trommelkörper (5), auf den ein Kabel (10) auf- und abwickelbar ist, wobei der Trommelkörper an einem Traggestell (2) um eine Trommelkörper-Drehachse (3) für ein Abwickeln des Kabels in Abwickel-Drehrichtung und für ein Aufwickeln des Kabels in Aufwickel-Drehrichtung verdrehbar gelagert ist, und mit einem am Trommelkörper ausgebildeten Hohlraum (9) als Trommelkörper-Aufnahmeraum, in dem ein Elektromotor (13,24,37) aufgenommen ist, mittels dem der Trommelkörper wenigstens in Aufwickel-Drehrichtung antreibbar ist. Erfindungsgemäß ist wenigstens eine als Schalter oder Taster ausgebildete Betätigungseinrichtung (12) außerhalb des Trommelkörper-Aufnahmeraums (9) angeordnet und unmittelbar oder mittelbar so mit dem Elektromotor (13,24,37) elektrisch verbunden, dass der Elektromotor (13,24,37) mittels der Betätigungseinrichtung (12) von außerhalb des Trommelkörpers (5) betätigbar ist.

## Beschreibung

Die Erfindung betrifft eine tragbare Kabeltrommel nach dem Oberbegriff des Anspruchs 1.

Aus der DE 199 19 998 A1 ist eine gattungsgemäße tragbare Kabeltrommel bekannt. Diese weist einen Trommelkörper auf, auf den ein Kabel auf- und abwickelbar ist, wobei der Trommelkörper an einem Traggestell um eine Trommelkörper-Drehachse für ein Abwickeln des Kabels in Abwickel-Drehrichtung und für ein Aufwickeln des Kabels in Aufwickel-Drehrichtung verdrehbar gelagert ist. Am Trommelkörper ist ein Hohlraum als Trommelkörper-Aufnahmeraum ausgebildet, in dem ein Elektromotor aufgenommen ist, mittels dem der Trommelkörper wenigstens in Aufwickel-Drehrichtung antreibbar ist.

Konkret ist bei dieser tragbaren Kabeltrommel der Elektromotor als Gleichstrommotor ausgebildet, der ständig eingeschaltet bleibt und somit ständig sein Drehmoment in Aufwickel-Drehrichtung auf den Trommelkörper überträgt für ein Aufwickeln des Kabels. Der Gleichstrommotor wird über ein Gleichrichternetzteil aus dem Stromnetz gespeist, wobei das Gleichrichternetzteil außerhalb des Trommelkörpers angeordnet ist und über ein separates Kabel mit dem Stromnetz verbunden werden kann. Soll das abgewickelte Kabel auf den Trommelkörper aufgewickelt werden, so wird über das separate Kabel das Gleichrichternetzteil an das Stromnetz angesteckt, so dass sich der Gleichstrommotor in Aufwickel-Drehrichtung dreht zum Aufwickeln des Kabels. Ist das Gleichrichternetzteil am Stromnetz eingesteckt, so treibt der Gleichstrommotor dauerhaft den Trommelkörper in Aufwickel-Drehrichtung an. Für ein Abschalten des Gleichstrommotors muss das Gleichrichternetzteil vom Stromnetz getrennt werden, was insgesamt wenig praktikabel ist. Ist an einem potentiellen Einsatzort der tragbaren Kabeltrommel kein Stromanschluss für das Gleichrichternetzteil vorhanden, so ist eine Aufwicklung des Kabels auf den Trommelkörper mittels dem Gleichstrommotor nicht möglich. In diesem Fall muss das Kabel nachteilig mittels Handbetrieb auf den Trommelkörper aufgewickelt werden.

Aus der DE 82 05 464 U1 ist eine Kabeltrommel mit elektromotorischen Antrieb für die Kabelrückführung bekannt. Dabei ist ein Elektromotor in einem Trommelkörper-Aufnahmeraum angeordnet, der über zwei Vorlegescheiben, die teilweise außerhalb des Trommelkörper-Aufnahmeraums angeordnet sind, den Trommelkörper der Kabeltrommel für ein Aufwickeln des Kabels antreibt. Für eine Drehmomentübertragung sind der Elektromotor, die beiden Vorlegescheiben und der Trommelkörper über Keilriemen so miteinander verbunden, dass das Drehmoment des Elektromotors auf den Trommelkörper übertragen wird. Ein Keilriemen ist dabei mit einem Übermaß ausgeführt, so dass im unbelasteten Zustand dieses Keilriemens keine Drehmomentübertragung stattfindet. Mittels eines Kupplungsschwenkhebels kann der Keilriemen so gespannt werden, dass eine Drehmomentübertragung stattfindet und somit der Trommelkörper angetrieben wird. Die Kabeltrommel insgesamt ist für einen stationären Einsatz vorgesehen, wie z. B. in Fernsehübertragungsund Rundfunkwagen, so dass ein Traggestell für einen flexiblen, ortsunabhängigen Einsatz der Kabeltrommel nicht vorgesehen ist.

Aufgabe der Erfindung ist es, eine tragbare Kabeltrommel zu schaffen, die unabhängig vom Einsatzort einfach und flexibel eingesetzt werden kann.

Diese Aufgabe wird mit den Merkmalen des Anspruchs 1 gelöst.

Gemäß Anspruch 1 ist wenigstens eine als Schalter oder Taster ausgebildete Betätigungseinrichtung außerhalb des Trommelkörper-Aufnahmeraums angeordnet und unmittelbar oder mittelbar so mit dem Elektromotor elektrisch verbunden, dass der Elektromotor mittels der Betätigungseinrichtung von außerhalb des Trommelkörpers betätigbar ist.

Vorteilhaft bei dieser tragbaren Kabeltrommel ist, dass mittels der Betätigungseinrichtung, die als Schalter oder Taster ausgebildet ist, der Elektromotor einoder ausgeschaltet werden kann. Somit ist der Elektromotor nur während des Aufwickelvorgangs des Kabels in Betrieb und ist nicht, wie beim gattungsgemäßen Stand der Technik, dauerhaft eingeschaltet. Damit wird die Betriebsstundenzahl über einen festgelegten Zeitraum im Vergleich zum gattungsgemäßen Stand der Technik vorteilhaft gesenkt, so dass dadurch etwaige anfallende Reparaturen aufgrund von langer Laufzeit des Elektromotors seltener zu erwarten sind.

In einer Weiterbildung gemäß Anspruch 2 kann die wenigstens eine Betätigungseinrichtung am Traggestell angeordnet sein. Dadurch ist die Betätigungseinrichtung funktionssicher und leicht zugänglich am Traggestell der Kabeltrommel angeordnet.

Ist gemäß Anspruch 3 am Traggestell ein Handgriffteil ausgebildet, so kann die Betätigungseinrichtung an diesem Handgriffteil angeordnet sein. Dadurch wird die Bedienung der Kabeltrommel vereinfacht, da mit einem Handgriff die Kabeltrommel einerseits getragen werden kann und andererseits bei einer Betätigung der Betätigungseinrichtung am Handgriffteil das Kabel aufgewickelt werden kann. Da für diesen Vorgang nur eine Hand notwendig ist, kann mit der zweiten Hand vorteilhaft das Kabel während des Aufwickelvorgangs gereinigt werden. So kann z. B. das sich aufwickelnde Kabel kurz vor dem Trommelkörper mit einem Reinigungstuch umfasst werden, so dass es sauber auf den Trommelkörper bei einer Betätigung der Betätigungseinrichtung am Handgriffteil aufgewickelt wird.

In einer weiteren Ausführungsform gemäß Anspruch 4 kann die wenigstens eine Betätigungseinrichtung mittels wenigstens einer elektrischen Leitungsverbindung mit dem Elektromotor verbunden sein. Ist die Betätigungseinrichtung am Traggestell angeordnet, so kann die Leitungsverlegung von der Betätigungseinrichtung zum Elektromotor am oder innerhalb des Traggestells einfach angebracht werden.

In einer alternativen Ausführungsform gemäß Anspruch 5 kann die wenigstens eine Betätigungseinrichtung mit einer außerhalb des Trommelkörper-Aufnahmeraums am Traggestell angeordneten Sendeeinheit verbunden sein. Im Trommelkörper-Aufnahmeraum kann eine Empfangseinheit, die unmittelbar oder mittelbar mit dem Elektromotor verbunden ist, angeordnet sein. Somit wird bei einer Betätigung der Betätigungseinrichtung ein Funksignal als Steuersignal von der Sendeeinheit zur Empfangseinheit gesendet für ein Einoder Ausschalten des Elektromotors. Dadurch kann eine elektrische Leitungsverbindung von außerhalb des Trommelkörpers in den Trommelkörper-Aufnahmeraum vorteilhaft entfallen. Grundsätzlich kann die Sendeeinheit zusammen mit der Betätigungseinrichtung auch als separates Bauteil in der Art einer Fernbedienung für die Kabeltrommel ausgeführt sein, wobei dabei die Gefahr besteht, dass diese Fernbedienung, insbesondere bei einem Baustelleneinsatz der Kabeltrommel, verloren geht.

In einer weiteren Ausführungsform gemäß Anspruch 6 kann wenigstens ein Schaltelement im Stromkreis zwischen dem Elektromotor und der Betätigungseinrichtung zwischengeschalten sein. Somit wird bei einer Betätigung der Betätigungseinrichtung ein Steuerstromkreis geschlossen, wodurch im Schaltelement ein Schaltvorgang für ein Ein- oder Ausschalten des Elektromotors bewirkt wird. Durch den Einsatz des Schaltelements ist an der Betätigungseinrichtung ein Steuerstrom mit niedriger Stromstärke ausreichend, so dass dadurch die elektrische Verbindung zwischen dem Schaltelement, das vorteilhaft innerhalb des Trommelkörper-Aufnahmeraums angeordnet ist, und der Betätigungseinrichtung vereinfacht ist.

In einer Weiterbildung gemäß Anspruch 7 kann das wenigstens eine Schaltelement als Relais ausgebildet sein. Damit ist für das Schaltelement ein gebräuchliches Bauteil eingesetzt, mit dem funktionssicher der Elektromotor ein- oder ausgeschalten werden kann.

Für die Stromversorgung für den Elektromotor kann gemäß Anspruch 8 wenigstens ein Netzanschluss an der Kabeltrommel vorgesehen sein, der unmittelbar oder mittelbar mit dem Elektromotor verbunden ist. Somit kann die Kabeltrommel über den Netzanschluss mit dem Stromnetz verbunden werden, so dass der Elektromotor bei einer Betätigung der Betätigungseinrichtung den Trommelkörper für ein Aufwickeln des Kabels antreibt. Ist das verwendete Kabel auf der Kabeltrommel ein Stromkabel, so kann die Stromversorgung für den Elektromotor auch über dieses auf den Trommelkörper aufwickelbare Kabel hergestellt werden.

Um den Einsatzort der tragbaren Kabeltrommel bezüglich der Aufwickelfunktion weitgehend unabhängig von vorhandenen Stromanschlüssen zu machen, kann gemäß Anspruch 9 wenigstens eine Stromspeichereinheit im Trommelkörper-Aufnahmeraum vorgesehen sein, die unmittelbar oder mittelbar mit dem Elektromotor verbunden ist zur Herstellung einer Stromversorgung für den Elektromotor. Somit sind sowohl der Elektromotor als auch die zur Herstellung der Stromversorgung für den Elektromotor notwendige Stromspeichereinheit im Trommelkörper-Aufnahmeraum aufgenommen. Somit kann die tragbare Kabeltrommel flexibel eingesetzt werden, wobei an jedem Einsatzort ein Aufwickeln des Kabels auf den Trommelkörper mittels dem Antrieb durch den Elektromotor möglich ist.

In einer bevorzugten Weiterbildung kann gemäß Anspruch 10 die wenigstens eine Stromspeichereinheit als Akku ausgebildet sein. Mit dem Akku ist ein regelmäßig verwendetes Bauteil eingesetzt, mittels dem funktionssicher ein Betreiben des Elektromotors und somit ein Aufwickeln des Kabels auf den Trommelkörper der Kabeltrommel möglich ist.

Zum Aufladen der Stromspeichereinheit kann gemäß Anspruch 11 wenigstens eine Anschlusseinrichtung an der Kabeltrommel vorgesehen sein, mittels der ein Netzanschluss zum Aufladen der Stromspeichereinheit hergestellt werden kann. In einer Weiterbildung kann mittels einer Ladeanzeige, die beispielsweise am Traggestell angeordnet ist, der Ladezustand der Stromspeichereinheit angezeigt werden, so dass ein rechtzeitiges Aufladen über die Anschlusseinrichtung an der Kabeltrommel durchgeführt werden kann. Grundsätzlich kann die Aufladung der Stromspeichereinheit auch mittels einer beispielsweise dem Traggestell angeordneten Photovoltaikeinheit mit Sonnenenergie erfolgen.

In einer besonders bevorzugten Ausführungsform kann gemäß Anspruch 12 der Trommelkörper als Hohlzylinder ausgebildet sein. Dabei ist eine radial um die Trommelkörper-Drehachse umlaufende Trommelkörper-Zylinderwand vorgesehen, die mittels je einer Zylinder-Stirnwand unter Ausbildung des Trommelkörper-Aufnahmeraums stirnseitig abgedeckt ist. Somit ist der Trommelkörper einfach aufgebaut, wobei der Trommelkörper-Aufnahmeraum dabei bezüglich seines Volumens größtmöglich ausgeführt ist, so dass der Elektromotor und beispielsweise die Stromspeichereinheit problemlos innerhalb des Trommelkörper-Aufnahmeraums angeordnet werden können.

Gemäß Anspruch 13 können die beiden Zylinder-Stirnwände radial über die Trommelkörper-Zylinderwand für eine seitliche Abstützung des aufgewickelten Kabels überstehen. Somit kann das Kabel einfach und funktionssicher auf den Trommelkörper mittels dem Antrieb des Elektromotors aufgewickelt werden, wobei durch die radial überstehenden Zylinder-Stirnwände ein Abrutschen des Kabels von der Trommelkörper-Zylinderwand, was zu einer etwaigen Verklemmung des Kabels zwischen dem Trommelkörper und dem Traggestell führen kann, vermieden ist.

Für eine einfache Zugänglichkeit in den Trommelkörper-Aufnahmeraum kann gemäß Anspruch 14 wenigstens eine der beiden Zylinder-Stirnwände lösbar mit der Trommelkörper-Zylinderwand verbunden sein. So kann einfach und schnell bei einer etwaigen Reparatur, beispielsweise des Elektromotors, durch Demontage einer der beiden Zylinder-Stirnwände ein Zugriff zum Trommelkörper-Aufnahmeraum hergestellt werden.

In einer weiteren Ausführungsform kann gemäß Anspruch 15 ein Achsenelement unverdrehbar am Traggestell als Trommelkörper-Drehachse angeordnet sein, wobei der Trommelkörper drehbar am Achsenelement gelagert ist. Somit ist bei einem einfachen Aufbau der Kabeltrommel ein funktionssicheres Drehen des Trommelkörpers um die Trommelkörper-Drehachse zum Auf- oder Abwickeln des Kabels sichergestellt.

In einer bevorzugten Ausgestaltung gemäß Anspruch 16 kann wenigstens ein Schleifelement, das mit der Betätigungseinrichtung elektrisch verbunden ist, unverdrehbar am Achsenelement angeordnet sein. Wenigstens ein Schleifgegenelement, das unmittelbar oder mittelbar mit dem Elektromotor elektrisch verbunden ist, ist an einem Trommelkörper-Zylinderinnenwandbereich angeordnet. Zwischen dem Schleifgegenelement und dem Schleifelement kann eine elektrische Schleifverbindung zwischen der Betätigungseinrichtung und dem Elektromotor hergestellt werden, die unabhängig von einer Drehposition des Trommelkörpers gegenüber dem Achsenelement ist. Somit ist eine Stromverbindung zwischen der Betätigungseinrichtung und dem Elektromotor funktionssicher und einfach hergestellt. Das Schleifgegenelement dreht sich mit dem Trommelkörper beim Aufwickeln des Kabels so um die als Achsenelement ausgebildete Trommelkörper-Drehachse, dass zu jedem Zeitpunkt der Drehung des Trommelkörpers ein Schleifkontakt mit dem Schleifelement und somit eine Stromübertragung zwischen der Betätigungseinrichtung und dem Elektromotor hergestellt ist.

Für den Antrieb des Trommelkörpers durch den Elektromotor kann gemäß Anspruch 17 ein erstes Zahnrad unverdrehbar am Achsenelement angeordnet sein. Der an einem Trommelkörper-Zylinderinnenwandbereich angeordnete Elektromotor treibt ein am Elektromotor drehbar gelagertes zweites Zahnrad, das mit dem ersten Zahnrad in Eingriff bringbar ist, an. Somit wird die vom Elektromotor erzeugte Drehung auf das zweite Zahnrad übertragen, so dass sich der Elektromotor, der an der Trommelkörper-Zylinderinnenwand angeordnet ist, mit dem zweiten Zahnrad um das am Achsenelement unverdrehbar angeordnete erste Zahnrad dreht. Dadurch wird der Trommelkörper der drehbar am Achsenelement gelagert ist, um die als Achsenelement ausgebildete Trommelkörper-Drehachse gedreht.

Alternativ zu dem Zahnradpaar kann gemäß Anspruch 18 ein erstes Reibrad unverdrehbar am Achsenelement angeordnet sein. Der an einem Trommelkörper-Zylinderinnenwandbereich angeordnete Elektromotor treibt ein am Elektromotor drehbar gelagertes zweites Reibrad, das mit dem ersten Reibrad für eine Drehmomentübertragung mit den jeweils radial umlaufenden Mantelflächen des ersten und zweiten Reibrades in Reibkontakt bringbar ist, an. Somit ist nach dem gleichen Prinzip, wie oben mit dem Zahnradpaar beschrieben, eine Drehung des Trommelkörpers um die als Achsenelement ausgebildete Trommelkörper-Drehachse möglich.

In einer weiteren Ausführungsform kann gemäß Anspruch 19 ein vom Elektromotor drehantreibbares Drehteil drehbar am Achsenelement angeordnet sein. Ein Kupplungselement ist unverdrehbar am Drehteil angeordnet. Ein mittels einem Kupplungshebel betätigbares Kupplungsgegenelement ist so vorgesehen, dass bei einer Betätigung des Kupplungshebels das Kupplungsgegenelement von einer Auskuppel-Stellung in eine Einkuppel-Stellung unter Herstellung eines Reibschlusses in Reibkontakt mit dem Kupplungselement verlagerbar ist für eine Drehung des Trommelkörpers um die als Achsenelement ausgebildete Trommelkörper-Drehachse. Somit wird das Drehmoment vom Elektromotor erst bei Betätigung des Kupplungshebels und somit der Verlagerung des Kupplungsgegenelements von der Auskuppel-Stellung in die Einkuppel-Stellung auf den Trommelkörper übertragen.

In einer bevorzugten Ausführungsform gemäß Anspruch 20 kann das Kupplungsgegenelement mittels einer Kupplungsfeder in der Auskuppel-Stellung gehalten sein. Der Kupplungshebel ist am Traggestell angeordnet und mit einem Seilzug mit dem Kupplungsgegenelement verbunden. Somit wird bei einer Betätigung des Kupplungshebels der Seilzug so verlagert, dass das Kupplungsgegenelement gegen die Federkraft der Kupplungsfeder in die Einkuppel-Stellung verlagerbar ist für eine Drehung des Trommelkörpers um die Trommelkörper-Drehachse. Wird der Kupplungshebel wieder gelöst, ist das Kupplungsgegenelement aufgrund der Federkraft der Kupplungsfeder zurück in die Auskuppel-Stellung verlagerbar. Der Seilzug kann beispielsweise innerhalb des Traggestells bzw. des Achsenelements verlaufen, so dass funktionssicher eine Verlagerung des Seilzugs bei einer Betätigung des Kupplungshebels und somit eine Verlagerung des Kupplungsgegenelements von der Auskuppel-Stellung in die Einkuppel-Stellung möglich ist. Der Seilzug ist bevorzugt in der Art eines Bowdenzuges ausgeführt, so dass eine Verlagerung des Seilzuges innerhalb der Bowdenzughülle einfach und funktionssicher durchgeführt werden kann.

In einer Weiterbildung gemäß Anspruch 21 kann der Kupplungshebel und die Betätigungseinrichtung miteinander gekoppelt sein. Somit sind mit einer Betätigung der Kupplungshebel und die Betätigungseinrichtung zusammen betätigbar. Auch hier kann mit einer Hand eine Bedienung der Kabeltrommel zum elektrischen Aufwickeln des Kabels erfolgen. Die zweite Hand ist vorteilhaft z. B. für eine Reinigung des sich aufwickelnden Kabels frei.

In einer Weiterbildung gemäß Anspruch 22 kann das Kupplungselement und das Kupplungsgegenelement jeweils als Kupplungsscheibe ausgeführt sein. Alternativ kann das Kupplungsgegenelement auch so ausgeführt sein, dass das Kupplungsgegenelement in der Einkuppel-Stellung das Drehteil bereichsweise formschlüssig übergreift und somit das Drehteil selbst als Kupplungselement fungiert, so dass mittels dem formschlüssigen Übergriff des Kupplungsgegenelements über das Drehteil eine Drehmomentübertragung stattfinden kann.

In einer weiteren Ausführungsform gemäß Anspruch 23 kann der Elektromotor unverdrehbar am Achsenelement angeordnet sein. Das Drehteil ist für eine Drehmomentübertragung vom Elektromotor auf das Drehteil mittels eines Zahnradpaares oder mittels eines Riementriebes oder mittels eines Kettentriebes antreibbar. Das Kupplungsgegenelement ist unverdrehbar mit dem Trommelkörper verbunden, so dass bei einer Betätigung des Kupplungshebels eine Drehmomentübertragung vom Drehteil auf den Trommelkörper stattfindet. Somit sind regelmäßig verwendete Drehmomentübertragungsmöglichkeiten für den Antrieb des Drehteils vorgeschlagen. Je nach beispielsweise zur Verfügung stehenden Bauraum im Trommelkörper-Aufnahmeraum kann eine der Antriebsmöglichkeiten für das Drehteil gewählt werden.

In einer weiteren Ausführungsform gemäß Anspruch 24 kann der Elektromotor an einem Trommelkörper-Zylinderinnenwandbereich angeordnet sein. Der Kupplungshebel kann dabei als ein von außerhalb des Trommelkörpers betätigbarer Arretierstift ausgebildet sein, der zwischen der Auskuppel-Stellung und der Einkuppel-Stellung entlang der Trommelkörper-Drehachse axial verlagerbar ist. Der Arretierstift ist unverdrehbar am Achsenelement angeordnet. Das Kupplungsgegenelement ist unverdrehbar mit dem Arretierstift verbunden. Somit wird bei einer Betätigung des Arretierstiftes von der Auskuppel-Stellung in die Einkuppel-Stellung zwischen dem Kupplungsgegenelement und dem Kupplungselement ein Reibschluss hergestellt, so dass das Drehteil bezüglich seiner Drehung um die Trommelkörper-Drehachse arretierbar ist für eine Drehung des Trommelkörpers um die als Achsenelement ausgebildete Trommelkörper-Drehachse. Auch hier ist das Kupplungselement unverdrehbar am Drehteil angeordnet, so dass bei einer axialen Verlagerung des Arretierstifts von der Auskuppel-Stellung in die Einkuppel-Stellung ein Reibschluss zwischen dem Kupplungsgegenelement, das unverdrehbar mit dem Arretierstift verbunden ist, und dem Kupplungselement hergestellt wird. Dadurch wird das Drehteil bezüglich seiner Drehung arretiert und der Trommelkörper wird aufgrund der Anbringung des Elektromotors am Trommelkörper-Zylinderinnenwandbereich um die Trommelkörper-Drehachse gedreht.

Für eine Drehmomentübertragung vom Elektromotor auf das Drehteil kann dieses gemäß Anspruch 25 mittels eines Zahnradpaares oder mittels eines Reibradpaares antreibbar sein. Dabei ist jeweils ein Zahnrad oder Reibrad unverdrehbar am Drehteil angeordnet, wobei das andere Zahnrad oder Reibrad vom Elektromotor angetrieben wird. Grundsätzlich ist jede technisch machbare Art von Drehmomentübertragung vom Elektromotor auf das Drehteil möglich.

In einer besonders bevorzugten Ausführungsform gemäß Anspruch 26 kann bei einer Anbringung des Elektromotors am Trommelkörper-Zylinderinnenwandbereich am dem Elektromotor radial gegenüberliegenden Trommelkörper-Zylinderinnenwandbereich ein Gegengewicht angeordnet sein. Somit wird bei einer Drehung des Trommelkörpers um die Trommelkörper-Drehachse eine Unwucht des Trommelkörpers bei der Trommelkörper-Drehung vermieden. Ist die Stromversorgung für den Elektromotor mittels einer Stromspeichereinheit, die ebenfalls innerhalb des Trommelkörper-Aufnahmeraums angeordnet ist, hergestellt, so kann die Stromspeichereinheit als Gegengewicht zum Elektromotor am dem Elektromotor radial gegenüberliegenden Trommelkörper-Zylinderinnenwandbereich angeordnet werden. Insgesamt ist bei der Anordnung sämtlicher innerhalb des Trommelkörper-Aufnahmeraums angeordneten Bauteile, die sich bei einer Drehung des Trommelkörpers mitdrehen, darauf zu achten, dass in etwa eine gewichtsmäßig gleichmäßige Verteilung innerhalb des Trommelkörper-Aufnahmeraums um die Trommelkörper-Drehachse geschaffen ist.

In einer alternativen Ausführungsform kann gemäß Anspruch 27 der Elektromotor unverdrehbar am Achsenelement angeordnet sein. Dabei kann eine Drehmomentübertragung vom Elektromotor auf den Trommelkörper durchführbar sein. Diese Drehmomentübertragung kann beispielsweise mittels eines Zahnradpaares vom Elektromotor auf den Trommelkörper erfolgen. Grundsätzlich ist aber jede Art von Drehmomentübertragung, wie z. B. die Herstellung eines Reibschlusses in der Art einer Kupplungseinheit zwischen einer vom Elektromotor angetriebenen Reibscheibe und dem Trommelkörper, denkbar.

In einer weiteren Ausführungsvariante der Kabeltrommel kann gemäß Anspruch 28 ein Achsenelement verdrehbar am Traggestell als Trommelkörper-Drehachse angeordnet sein. Dabei ist der Trommelkörper unverdrehbar am Achsenelement gelagert. Mögliche Antriebsvarianten für den Trommelkörper durch den Elektromotor können auch hier beispielsweise mittels einer Drehmomentübertragung durch ein Zahnradpaar erfolgen.

In einer bevorzugten Ausführungsform gemäß Anspruch 29 weist der Elektromotor in Abwickel-Drehrichtung des Trommelkörpers einen Freilauf auf. Somit kann das auf den Trommelkörper aufgewickelte Kabel unabhängig von der im Trommelkörper-Aufnahmeraum angeordneten Antriebsmechanik zum Aufwickeln des Kabels abgewickelt werden. Grundsätzlich ist auch ein Umschalten des Elektromotors zwischen Aufwickel-Drehrichtung und Abwickel-Drehrichtung denkbar, so dass auch das Abwickeln des Kabels vom Trommelkörper durch einen Antrieb des Trommelkörpers in Abwickel-Drehrichtung durch den Elektromotor erfolgt.

Zudem kann gemäß Anspruch 30 die mechanische Drehmomentübertragung vom Elektromotor auf den Trommelkörper mit der Betätigung der Betätigungseinrichtung herstellbar sein. Somit findet bei unbetätigter Betätigungseinrichtung keine mechanische Drehmomentübertragung statt, wodurch der Trommelkörper in Abwickel-Drehrichtung zum Abwickeln des Kabels vom Trommelkörper frei gedreht werden kann.

In einer Weiterbildung gemäß Anspruch 31 kann die Drehzahl des Elektromotors regelbar sein. Somit kann beispielsweise kurz vor Ende des Aufwickelvorgangs die Drehzahl des Elektromotors gesenkt werden, so dass dadurch die Drehgeschwindigkeit des Trommelkörpers gesenkt wird und somit das Ende des Kabels vorsichtig fertig aufgerollt werden kann.

Die Drehzahlregelung des Elektromotors kann gemäß Anspruch 32 mittels der Betätigungseinrichtung durchführbar sein. Ist die Betätigungseinrichtung beispielsweise als Taster ausgeführt, so kann die Drehzahlregelung in Abhängigkeit von der Eindrücktiefe des Tasters gekoppelt sein. D. h. je weiter der Taster eingedrückt ist um so größer ist die Drehzahl, wodurch eine einfache und funktionssichere Steuerung der Drehzahl des Elektromotors möglich ist.

In einer weiteren Ausgestaltung kann gemäß Anspruch 33 das Kabel als Schlauch ausgebildet sein. Somit kann die tragbare Kabeltrommel auch für Schläuche, wie z. B. einem Gartenschlauch eingesetzt werden. Grundsätzlich kann jede Art von Wickelgut auf dem Trommelkörper aufgewickelt werden.

Anhand einer Zeichnung wird die Erfindung näher erläutert.

Es zeigen:
- Fig. 1: eine schematische Schnittdarstellung durch eine Kabeltrommel in einer ersten Ausführungsform,
- Fig. 2: eine schematische Schnittdarstellung durch die Kabeltrommel in einer zweiten Ausführungsform,
- Fig. 3: eine schematische Schnittdarstellung durch die Kabeltrommel in einer dritten Ausführungsform, und
- Fig. 4: eine schematische Schnittdarstellung durch die Kabeltrommel in einer vierten Ausführungsform.

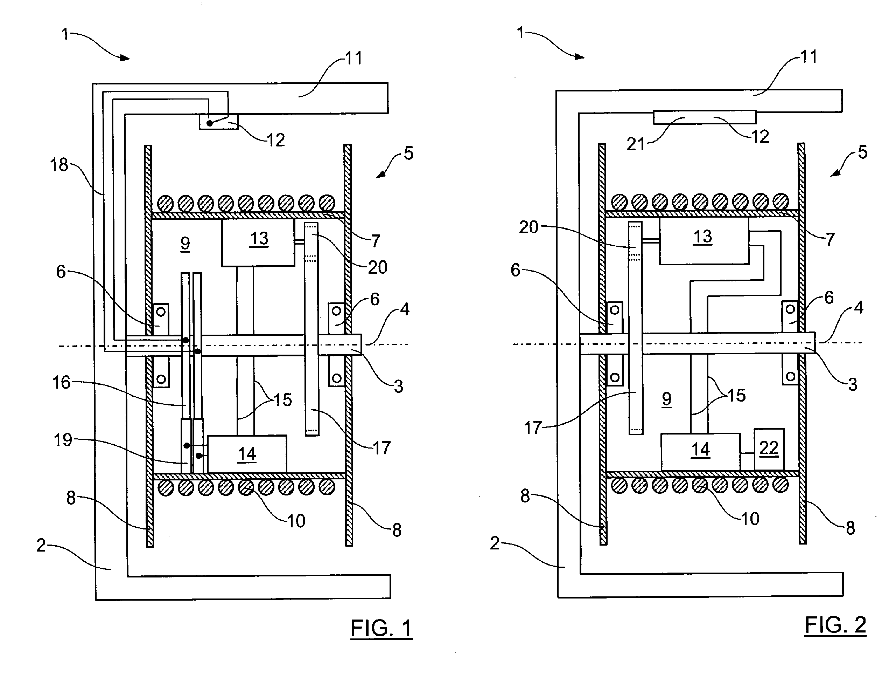

In Fig. 1 ist schematisch eine Schnittdarstellung durch eine tragbare Kabeltrommel 1 dargestellt. An einem Traggestell 2 ist unverdrehbar ein Achsenelement 3 angeordnet, das eine Trommelkörper-Drehachse 4 für einen Trommelkörper 5 ausbildet, so dass der Trommelkörper 5 um die als Achsenelement 3 ausgebildete Trommelkörper-Drehachse 4 drehbar ist. Der Trommelkörper 5 ist dazu mittels zweier Drehlager 6 drehbar am Achsenelement 3 angeordnet. Der Trommelkörper 5 ist als Hohlzylinder ausgebildet, wobei eine radial um die Trommelkörper-Drehachse 4 umlaufende Trommelkörper-Zylinderwand 7 vorgesehen ist, die mittels je einer Zylinder-Stirnwand 8 unter Ausbildung eines Trommelkörper-Aufnahmeraums 9 stirnseitig abgedeckt ist.

Die beiden Zylinder-Stirnwände 8 stehen radial über die Trommelkörper-Zylinderwand 7 über, so dass eine seitliche Abstützung für ein aufgewickeltes Kabel 10 gebildet ist. Am Traggestell 2 ist ein Handgriffteil 11 ausgebildet, an dem eine Betätigungseinrichtung 12 angeordnet ist.

Der oben beschriebene Grundaufbau der Kabeltrommel 1 ist in allen Figuren identisch, so dass aus Übersichtlichkeitsgründen für die dementsprechenden Bauteile des Grundaufbaus der Kabeltrommel in allen Figuren die gleichen Bezugszeichen verwendet sind. Die im Trommelkörper-Aufnahmeraum 9 angeordnete Mechanik für den Drehantrieb des Trommelkörpers 5 ist in den Figuren 1 bis 4 in unterschiedlichen Ausführungsformen, die nun näher erläutert werden, gezeigt.

Bei der in Fig. 1 schematisch im Schnitt dargestellten Ausführungsform der Kabeltrommel ist an der Innenseite der Trommelkörper-Zylinderwand 7 ein Elektromotor 13 ortsfest angebunden. Die Stromversorgung des Elektromotors 13 erfolgt über einen Akku 14, der an der gegenüberliegenden Innenseite der Trommelkörper-Zylinderwand 7 angeordnet ist. Der Elektromotor 13 und der Akku 14 sind mittels Leitungen 15 elektrisch verbunden. Am Achsenelement 3 ist einerseits ein Schleifelement 16 und andererseits ein erstes Zahnrad 17 jeweils unverdrehbar angeordnet. Vom Schleifelement 16 ausgehend ist eine Leitungsverbindung 18 innerhalb des Traggestells 2 zu der am Handgriffteil 11 angeordneten Betätigungseinrichtung 12 ausgebildet. Benachbart zum Akku 14 sind an der Innenseite der Trommelkörper-Zylinderwand 7 Schleifgegenelemente 19 angeordnet, die mit den Schleifelementen 16 in Schleifkontakt auch während einer Drehung des Trommelkörpers 5 um die Trommelkörper-Drehachse 4 stehen. Somit ist ein Stromkreis gebildet, der durch die Betätigung der Betätigungseinrichtung 12 geschlossen bzw. geöffnet werden kann, so dass der Elektromotor 13 ein- bzw. ausgeschalten wird. Am Elektromotor 13 ist ein zweites Zahnrad 20 angeordnet, das mit dem ersten Zahnrad 17, das unverdrehbar am Achsenelement 3 angeordnet ist, in Eingriff steht. Wird nun die Betätigungseinrichtung 12 betätigt so wird der Stromkreis geschlossen, so dass der Elektromotor 13 das zweite Zahnrad 20 antreibt. Da das erste Zahnrad 17 unverdrehbar am Achsenelement 3 angeordnet ist und der Elektromotor 13 an der Innenseite der Trommelkörper-Zylinderwand 7 angeordnet ist wird der Elektromotor 13 und somit der Trommelkörper 5 um das Achsenelement 3, das die Trommelkörper-Drehachse 4 bildet, gedreht. Somit kann das Kabel 10 auf den Trommelkörper 5 aufgewickelt werden.

Bei der in Fig. 2 dargestellten Ausführungsform der Kabeltrommel 1 ist im Unterschied zur Ausführungsform von Fig. 1 die Betätigungseinrichtung 12 mit einer nicht näher gekennzeichneten Sendeeinheit 21 gekoppelt, die bei Betätigung der Betätigungseinrichtung 12 ein Funksignal an eine Empfangseinheit 22 sendet für ein Ein- bzw. Ausschalten des Elektromotors 13. Die Empfangseinheit 22 ist dazu mit dem Akku 14 gekoppelt dergestalt, dass nur bei empfangenem Funksignal von der Sendeeinheit 21 ein Stromfluss vom Akku 14 über die Leitung 15 zum Elektromotor 13 erfolgt. Der Antrieb des Trommelkörpers 5 vom Elektromotor 13 über das erste Zahnrad 17 und das zweite Zahnrad 20 ist analog dem oben beschriebenen Antrieb der Ausführungsvariante der Kabeltrommel 1 von Fig. 1.

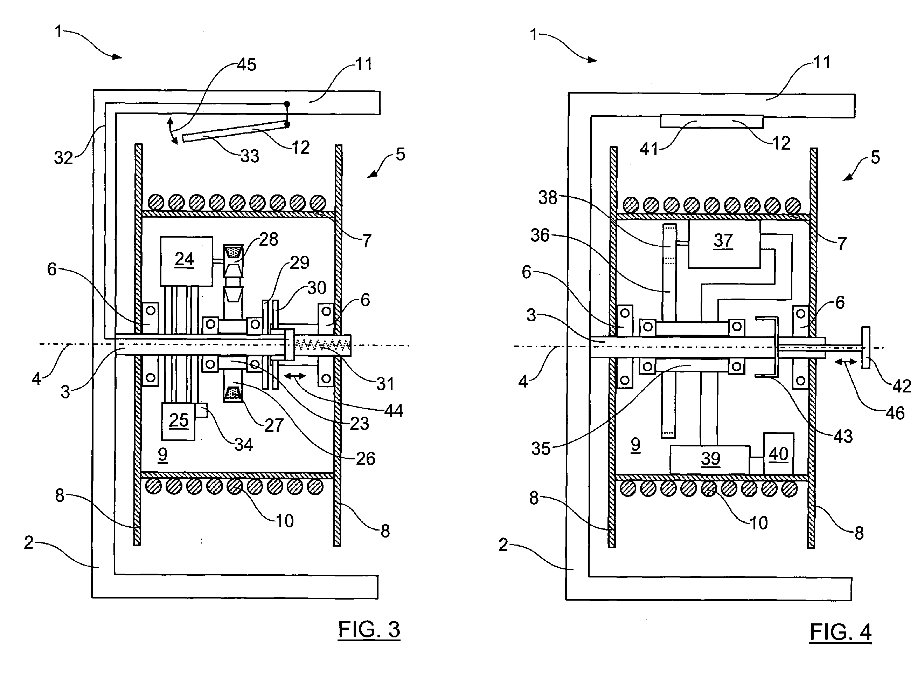

In der in Fig. 3 schematisch im Schnitt dargestellten Ausführungsform der Kabeltrommel 1 ist am Achsenelement 3 ein Drehteil 23 drehbar gelagert. Ein Elektromotor 24 ist unverdrehbar am Achsenelement 3 angeordnet und wird mit einem Akku 25, der ebenfalls am Achsenelement 3 angeordnet ist, mit Strom versorgt. Am Drehteil 23 ist eine erste Riemenscheibe 26 unverdrehbar angeordnet, die mittels einem Keilriemen 27 mit einer zweiten Riemenscheibe 28, die vom Elektromotor 24 drehangetrieben ist, gekoppelt ist. Somit wird mittels dem Keilriemen 27 das vom Elektromotor 24 erzeugte Drehmoment auf das Drehteil 23 übertragen. Ein Kupplungselement 29 ist unverdrehbar am Drehteil 23 angeordnet, wobei ein Kupplungsgegenelement 30 unverdrehbar mit dem Trommelkörper 5 verbunden ist. Eine Kupplungsfeder 31 hält das Kupplungsgegenelement 30 in der in Fig. 3 dargestellten Auskuppel-Stellung des Kupplungsgegenelements 30. Über einen Seilzug 32 ist das Kupplungsgegenelement 30 mit einem Kupplungshebel 33 verbunden. Bei einer Betätigung des Kupplungshebels 33 (Pfeil 45) wird der Seilzug 32 derart verlagert, dass das Kupplungsgegenelement von der Auskuppel-Stellung gegen die Federkraft der Kupplungsfeder 31 in die Einkuppel-Stellung verlagert wird (Pfeil 44). In der Einkuppel-Stellung wird das Kupplungsgegenelement 30 unter Herstellung eines Reibschlusses mit dem Kupplungselement 29 in Reibkontakt gebracht, so dass Drehmoment vom Drehteil 23 auf den Trommelkörper 5 für ein Aufwickeln des Kabels 10 auf den Trommelkörper 5 übertragen werden kann. Der Akku 25 ist mit einer Empfangseinheit 34 gekoppelt, die von einer hier nicht mit dargestellten Sendeeinheit ein Funksignal zum Ein- bzw. Ausschalten des Elektromotors 24 empfängt. Die mit der Sendeeinheit gekoppelte Betätigungseinrichtung 12 am Handgriffteil 11 der Kabeltrommel 1 ist vorteilhaft mit dem Kupplungshebel 33 vereint und ist in der Darstellung in Fig. 3 nicht näher gezeigt.

Bei der Ausführungsvariante, die in Fig. 4 in einer Schnittdarstellung der Kabeltrommel 1 schematisch gezeigt ist, ist ebenfalls ein Drehteil 35 drehbar am Achsenelement 3 angeordnet. Am Drehteil 35 ist ein erstes Zahnrad 36 unverdrehbar angeordnet, das mit einem von einem Elektromotor 37 angetriebenen zweiten Zahnrad 38 in Eingriff steht. Somit ist eine Drehmomentübertragung vom Elektromotor 37 mittels dem ersten Zahnrad 36 und dem zweiten Zahnrad 38 auf das Drehteil 35 möglich. Die Stromversorgung 37 ist auch hier wieder mit einem Akku 39, der mit einer Empfangseinheit 40 gekoppelt ist, verwirklicht. Die Betätigungseinrichtung 12 ist mit einer Sendeeinheit 41, die nicht näher dargestellt ist, gekoppelt, die bei Betätigung der Betätigungseinrichtung 12 ein Funksignal an die Empfangseinheit 40 zum Einund Ausschalten des Elektromotors 37 sendet. Ein Arretierstift 42 ist axial verschiebbar (Pfeil 46) an der Trommelkörper-Drehachse 4 und unverdrehbar am Achsenelement 3 angeordnet. Ein Kupplungsgegenelement 43 ist unverdrehbar mit dem Arretierstift 42 verbunden. In Fig. 4 ist die Auskuppel-Stellung des Kupplungsgegenelements 43 gezeigt. Wird der Arretierstift 42 axial in Richtung Trommelkörper-Aufnahmeraum 9 verlagert, so übergreift das Kupplungsgegenelement 43 das Drehteil 35, das hier als Kupplungselement fungiert, formschlüssig unter Herstellung eines Reibschlusses zwischen dem Drehteil 35 und dem Kupplungsgegenelement 43. Dadurch wird das Drehteil bezüglich seiner Drehung um die Trommelkörper-Drehachse arretiert und ist somit unverdrehbar am Achsenelement angeordnet. Dadurch erfolgt eine Drehung des Trommelkörpers 5 um die Trommelkörper-Drehachse 4 und somit ein Aufwickeln des Kabels 10 auf den Trommelkörper 5 in der Art wie bei der in Fig. 1 beschriebenen Ausführungsvariante.

Unabhängig von den in den Figuren 1 bis 4 unterschiedlichen Ausführungsvarianten der Kabeltrommel 1 ist insgesamt eine Kabeltrommel 1 geschaffen, die einfach und flexibel an unterschiedlichsten Einsatzorten verwendet werden kann. Bei der Stromversorgung des Elektromotors 13, 24 und 37 durch einen Akku 14, 25 und 39 ist ein Aufwickeln des Kabels 10 auf den Trommelkörper 5 an jedem Einsatzort möglich. Da die Betätigungseinrichtung 12 am Handgriffteil 11 des Traggestells 2 der Kabeltrommel 1 angeordnet ist, kann die Kabeltrommel 1 mit einer Hand sowohl getragen werden als auch zugleich die Betätigungseinrichtung 12 für ein Aufwickeln des Kabels 10 auf den Trommelkörper 5 betätigt werden. Somit ist vorteilhaft die zweite Hand frei, mit der beispielsweise das aufzuwickelnde Kabel gleichzeitig gereinigt werden kann.

## Patentansprüche

1. Tragbare Kabeltrommel
mit einem Trommelkörper, auf den ein Kabel auf- und abwickelbar ist, wobei der Trommelkörper an einem Traggestell um eine Trommelkörper-Drehachse für ein Abwickeln des Kabels in Abwickel-Drehrichtung und für ein Aufwickeln des Kabels in Aufwickel-Drehrichtung verdrehbar gelagert ist, und
mit einem am Trommelkörper ausgebildeten Hohlraum als Trommelkörper-Aufnahmeraum, in dem ein Elektromotor aufgenommen ist, mittels dem der Trommelkörper wenigstens in Aufwickel-Drehrichtung antreibbar ist,
**dadurch gekennzeichnet,**
**dass** wenigstens eine als Schalter oder Taster ausgebildete Betätigungseinrichtung (12) außerhalb des Trommelkörper-Aufnahmeraums (9) angeordnet ist und unmittelbar oder mittelbar so mit dem Elektromotor (13, 24, 37) elektrisch verbunden ist, dass der Elektromotor (13, 24, 37) mittels der Betätigungseinrichtung (12) von außerhalb des Trommelkörpers (5) betätigbar ist.

2. Kabeltrommel nach Anspruch 1, **dadurch gekennzeichnet, dass** die wenigstens eine Betätigungseinrichtung (12) am Traggestell (2) angeordnet ist.

3. Kabeltrommel nach Anspruch 2, **dadurch gekennzeichnet, dass** ein Handgriffteil (11) am Traggestell (2) ausgebildet ist, an dem die Betätigungseinrichtung (12) angeordnet ist.

4. Kabeltrommel nach einem der Ansprüche 1 bis 3, **dadurch gekennzeichnet, dass** die wenigstens eine Betätigungseinrichtung (12) mittels wenigstens einer elektrischen Leitungsverbindung (15) mit dem Elektromotor (13) verbunden ist.

5. Kabeltrommel nach einem der Ansprüche 1 bis 3, **dadurch gekennzeichnet,**
**dass** die wenigstens eine Betätigungseinrichtung (12) mit einer außerhalb des Trommelkörper-Aufnahmeraums (9) am Traggestell (2) angeordneten Sendeeinheit (21, 41) verbunden ist, und
**dass** eine Empfangseinheit (22, 34, 40) im Trommelkörper-Aufnahmeraum (9) angeordnet und unmittelbar oder mittelbar mit dem Elektromotor (13, 24, 37) verbunden ist dergestalt, dass bei einer Betätigung der Betätigungseinrichtung (12) ein Funksignal als Steuersignal von der Sendeeinheit (21, 41) zur Empfangseinheit (22, 34, 40) sendbar ist für ein Ein- oder Ausschalten des Elektromotors (13, 24, 37).

6. Kabeltrommel nach einem der Ansprüche 1 bis 5, **dadurch gekennzeichnet, dass** wenigstens ein Schaltelement im Stromkreis zwischen dem Elektromotor und der Betätigungseinrichtung zwischen dem Elektromotor und der Betätigungseinrichtung zwischengeschalten ist dergestalt, dass bei einer Betätigung der Betätigungseinrichtung ein Steuerstromkreis schließbar ist, so dass im Schaltelement ein Schaltvorgang bewirkbar ist für ein Ein- oder Ausschalten des Elektromotors.

7. Kabeltrommel nach Anspruch 6, **dadurch gekennzeichnet, dass** das wenigstens eine Schaltelement als Relais ausgebildet ist.

8. Kabeltrommel nach einem der Ansprüche 1 bis 7, **dadurch gekennzeichnet, dass** wenigstens ein Netzanschluss an der Kabeltrommel, vorzugsweise am Traggestell, vorgesehen ist, der unmittelbar oder mittelbar mit dem Elektromotor verbunden ist zur Herstellung einer Stromversorgung für den Elektromotor.

9. Kabeltrommel nach einem der Ansprüche 1 bis 8, **dadurch gekennzeichnet, dass** wenigstens eine Stromspeichereinheit (14, 25, 39) im Trommelkörper- Aufnahmeraum (9) vorgesehen ist, die unmittelbar oder mittelbar mit dem Elektromotor (13, 24, 37) verbunden ist zur Herstellung einer Stromversorgung für den Elektromotor (13, 24, 37).

10. Kabeltrommel nach Anspruch 9, **dadurch gekennzeichnet, dass** die wenigstens eine Stromspeichereinheit als Akku (14, 25, 39) ausgebildet ist.

11. Kabeltrommel nach Anspruch 9 oder 10, **dadurch gekennzeichnet, dass** wenigstens eine Anschlusseinrichtung an der Kabeltrommel vorgesehen ist mittels der ein Netzanschluss für ein Aufladen der Stromspeichereinheit herstellbar ist.

12. Kabeltrommel nach einem der Ansprüche 1 bis 11, **dadurch gekennzeichnet, dass** der Trommelkörper (5) als Hohlzylinder ausgebildet ist dergestalt, dass eine radial um die Trommelkörper-Drehachse (4) umlaufende Trommelkörper-Zylinderwand (7) vorgesehen ist, die mittels je einer Zylinder-Stirnwand (8) unter Ausbildung des Trommelkörper-Aufnahmeraums (9) stirnseitig abgedeckt ist.

13. Kabeltrommel nach Anspruch 12, **dadurch gekennzeichnet, dass** die beiden Zylinder-Stirnwände (8) radial über die Trommelkörper-Zylinderwand (7) überstehen für eine seitliche Abstützung des aufgewickelten Kabels (10).

14. Kabeltrommel nach Anspruch 12 oder 13, **dadurch gekennzeichnet, dass** wenigstens eine der beiden Zylinder-Stirnwände lösbar mit der Trommelkörper-Zylinderwand verbunden ist.

15. Kabeltrommel nach einem der Ansprüche 1 bis 14, **dadurch gekennzeichnet,**
**dass** ein Achsenelement (3) unverdrehbar am Traggestell (2) als Trommelkörper-Drehachse (4) angeordnet ist, und
**dass** der Trommelkörper (5) drehbar am Achsenelement (3) gelagert ist.

16. Kabeltrommel nach Anspruch 15, **dadurch gekennzeichnet,**
**dass** wenigstens ein Schleifelement (16), das mit der Betätigungseinrichtung (12) elektrisch verbunden ist, unverdrehbar am Achsenelement (3) angeordnet ist, und
**dass** wenigstens ein Schleifgegenelement (19), das unmittelbar oder mittelbar mit dem Elektromotor (13) elektrisch verbunden ist, an einem Trommelkörper-Zylinderinnenwandbereich (7) angeordnet ist dergestalt, dass zwischen dem Schleifgegenelement (19) und dem Schleifelement (16) eine elektrische Schleifverbindung zwischen der Betätigungseinrichtung (12) und dem Elektromotor (13) herstellbar ist unabhängig von einer Drehposition des Trommelkörpers (5) gegenüber dem Achsenelement (3).

17. Kabeltrommel nach Anspruch 15 oder 16, **dadurch gekennzeichnet,**
**dass** ein erstes Zahnrad (17) unverdrehbar am Achsenelement (3) angeordnet ist, und
**dass** der an einem Trommelkörper-Zylinderinnenwandbereich (7) angeordnete Elektromotor (13) ein am Elektromotor (13) drehbar gelagertes zweites Zahnrad (20), das mit dem ersten Zahnrad (17) in Eingriff bringbar ist, antreibt für eine Drehung des Trommelkörpers (5) um die als Achsenelement (3) ausgebildete Trommelkörper-Drehachse (4).

18. Kabeltrommel nach Anspruch 15 oder 16, **dadurch gekennzeichnet,**
**dass** ein erstes Reibrad unverdrehbar am Achsenelement angeordnet ist, und
**dass** der an einem Trommelkörper-Zylinderinnenwandbereich angeordnete Elektromotor ein am Elektromotor drehbar gelagertes zweites Reibrad, das mit dem ersten Reibrad für eine Drehmomentübertragung mit den jeweils radial umlaufenden Mantelflächen des ersten und zweiten Reibrades in Reibkontakt bringbar ist, antreibt für eine Drehung des Trommelkörpers um die als Achsenelement (3) ausgebildete Trommelkörper-Drehachse (4).

19. Kabeltrommel nach Anspruch 15, **dadurch gekennzeichnet,**
**dass** ein vom Elektromotor (24, 37) drehantreibbares Drehteil (23, 35) drehbar am Achsenelement (3) angeordnet ist,
**dass** ein Kupplungselement (29) unverdrehbar am Drehteil (23, 35) angeordnet ist, und
**dass** ein mittels einem Kupplungshebel (33, 42) betätigbares Kupplungsgegenelement (30, 43) vorgesehen ist dergestalt, dass bei einer Betätigung des Kupplungshebels (33, 42) das Kupplungsgegenelement (30, 43) von einer Auskuppel-Stellung in eine Einkuppel-Stellung unter Herstellung eines Reibschlusses im Reibkontakt mit dem Kupplungselement (29) verlagerbar ist für eine Drehung des Trommelkörpers (5) um die als Achsenelement (3) ausgebildete Trommelkörper-Drehachse (4).

20. Kabeltrommel nach Anspruch 19, **dadurch gekennzeichnet,**
**dass** das Kupplungsgegenelement (30) mittels einer Kupplungsfeder (31) in der Auskuppel-Stellung gehalten ist, und
**dass** der Kupplungshebel (33) am Traggestell (2) angeordnet ist und mit einem Seilzug mit dem Kupplungsgegenelement (30) verbunden ist dergestalt, dass bei einer Betätigung des Kupplungshebels (33) der Seilzug (32) so verlagerbar ist, dass das Kupplungsgegenelement (30) gegen die Federkraft der Kupplungsfeder (31) in die Einkuppel-Stellung verlagerbar ist für eine Drehung des Trommelkörpers (5) um die Trommelkörper-Drehachse (4) und dass bei einem Lösen des Kupplungshebels (33) das Kupplungsgegenelement (30) aufgrund der Federkraft der Kupplungsfeder (31) in die Auskuppel-Stellung verlagerbar ist.

21. Kabeltrommel nach Anspruch 20, **dadurch gekennzeichnet, dass** der Kupplungshebel (33) und die Betätigungseinrichtung miteinander gekoppelt sind dergestalt, dass mit einer Betätigung der Kupplungshebel (33) und die Betätigungseinrichtung betätigbar sind.

22. Kabeltrommel nach einem der Ansprüche 19 bis 21, **dadurch gekennzeichnet, dass** das Kupplungselement (29) und das Kupplungsgegenelement (30) jeweils als Kupplungsscheibe ausgeführt sind.

23. Kabeltrommel nach einem der Ansprüche 19 bis 22, **dadurch gekennzeichnet,**
**dass** der Elektromotor (24) unverdrehbar am Achsenelement (3) angeordnet ist,
**dass** das Drehteil (23) für eine Drehmomentübertragung vom Elektromotor (24) auf das Drehteil (23) mittels eines Zahnradpaares oder mittels eines Riemenbetriebes (26, 28) oder mittels eines Kettentriebes antreibbar ist, und
**dass** das Kupplungsgegenelement (30) unverdrehbar mit dem Trommelkörper (5) verbunden ist dergestalt, dass bei einer Betätigung des Kupplungshebels (33) eine Drehmomentübertragung vom Drehteil (23) auf den Trommelkörper (5) stattfindet.

24. Kabeltrommel nach Anspruch 19, **dadurch gekennzeichnet,**
**dass** der Elektromotor (37) an einem Trommelkörper-Zylinderinnenwandbereich (7) angeordnet ist,
**dass** der Kupplungshebel als ein von außerhalb des Trommelkörpers (5) betätigbarer Arretierstift (42) ausgebildet ist, der zwischen der Auskuppel-Stellung und der Einkuppel-Stellung entlang der Trommelkörper-Drehachse (4) axial verlagerbar ist,
**dass** der Arretierstift (42) unverdrehbar am Achsenelement (3) angeordnet ist, und
**dass** das Kupplungsgegenelement (43) unverdrehbar mit dem Arretierstift (42) verbunden ist dergestalt, dass bei einer Betätigung des Arretierstiftes (42) von der Auskuppel-Stellung in die Einkuppel-Stellung zwischen dem Kupplungsgegenelement und dem Kupplungselement ein Reibschluss herstellbar ist, so dass das Drehteil bezüglich seiner Drehung um die Trommelkörper-Drehachse (4) arretierbar ist für eine Drehung des Trommelkörpers (5) um die als Achsenelement (3) ausgebildete Trommelkörper-Drehachse (4).

25. Kabeltrommel nach Anspruch 24, **dadurch gekennzeichnet, dass** das Drehteil (35) für eine Drehmomentübertragung vom Elektromotor (37) auf das Drehteil (35) mittels eines Zahnradpaares (36, 38) oder mittels eines Reibradpaares antreibbar ist.

26. Kabeltrommel nach einem der Ansprüche 16 bis 25, **dadurch gekennzeichnet, dass** bei einer Anbringung des Elektromotors (13, 37) am Trommelkörper-Zylinderinnenwandbereich (7) an dem Elektromotor (13, 37) radial gegenüberliegenden Trommelkörper-Zylinderinnenwandbereich ein Gegengewicht, vorzugsweise eine Stromspeichereinheit (14, 39), zur Vermeidung einer Unwucht bei der Trommelkörper-Drehung angeordnet ist.

27. Kabeltrommel nach Anspruch 15, **dadurch gekennzeichnet,**
**dass** der Elektromotor unverdrehbar am Achsenelement angeordnet ist, und
**dass**, vorzugsweise mittels eines Zahnradpaares, eine Drehmomentübertragung vom Elektromotor auf den Trommelkörper durchführbar ist.

28. Kabeltrommel nach einem der Ansprüche 1 bis 14, **dadurch gekennzeichnet,**
**dass** ein Achsenelement verdrehbar am Traggestell als Trommelkörper-Drehachse angeordnet ist, und
**dass** der Trommelkörper unverdrehbar am Achsenelement gelagert ist.

29. Kabeltrommel nach einem der Ansprüche 1 bis 28, **dadurch gekennzeichnet, dass** der Elektromotor (13, 24, 37) in Abwickel-Drehrichtung des Trommelkörpers (5) einen Freilauf aufweist.

30. Kabeltrommel nach einem der Ansprüche 1 bis 29, **dadurch gekennzeichnet, dass** die mechanische Drehmomentübertragung mit der Betätigung der Betätigungseinrichtung herstellbar ist dergestalt, dass bei unbetätigter Betätigungseinrichtung keine mechanische Drehmomentübertragung stattfindet.

31. Kabeltrommel nach einem der Ansprüche 1 bis 30, **dadurch gekennzeichnet, dass** die Drehzahl des Elektromotors (13, 24, 37) regelbar ist.

32. Kabeltrommel nach Anspruch 31, **dadurch gekennzeichnet, dass** die Drehzahlregelung des Elektromotors (13, 24, 37) mittels der Betätigungseinrichtung (12) durchführbar ist.

33. Kabeltrommel nach einem der Ansprüche 1 bis 32, **dadurch gekennzeichnet, dass** das Kabel als Schlauch ausgebildet ist.
